# EUROPÄISCHE PATENTSCHRIFT

(11) **EP 2 275 292 B1**
(45) Veröffentlichungstag und Bekanntmachung des Hinweises auf die Patenterteilung: **02.01.2013**
(21) Anmeldenummer: 09290569.4
(22) Anmeldetag: 17.07.2009
(51) Int. Cl.: B60H 1/00, B60H 1/22

(54) **Kraftfahrzeug mit Klimaanlage**
Motor vehicle with air conditioning
Véhicule automobile avec climatisation

(43) Veröffentlichungstag der Anmeldung: 19.01.2011
(73) Patentinhaber: Behr France Rouffach SAS, 68250 Rouffach (FR)
(72) Erfinder: Bauer, Marc, 68440 Habsheim (FR); Brun, Michel, 68740 Rustenhart (FR)
(74) Vertreter: Grauel, Andreas

(56) Entgegenhaltungen:
- EP-A- 1 580 050
- DE-U- 7 436 282
- GB-A- 2 443 225

## Beschreibung

Die Erfindung betrifft ein Kraftfahrzeug gemäß dem Oberbegriff des Anspruches 1, wie es aus der GB 2 443 225 A bekannt ist.

Kraftfahrzeugklimaanlagen dienen dazu, die einem Innenraum eines Kraftfahrzeuges zuzuführende Luft zu erwärmen und/oder zu kühlen. Die Kraftfahrzeugklimaanlage umfasst hierzu eine Heizeinrichtung zum Erwärmen der Luft und einen Verdampfer zum Kühlen der Luft. Der Verdampfer ist dabei Teil eines Kältemittelkreislaufes mit einem Verdichter und einem Kondensator. Als Heizeinrichtung kann eine elektrische Heizeinrichtung und/oder ein Wärmeübertrager zum Erwärmen der Luft mittels Kühlflüssigkeit aus einem Kühlflüssigkeitskreislauf eines Verbrennungsmotors des Kraftfahrzeuges genutzt werden.

In zunehmenden Maße werden von der Kraftfahrzeugindustrie Elektrofahrzeuge und Hybridfahrzeuge hergestellt und/oder entwickelt. Elektrofahrzeuge verfügen nicht mehr über einen Verbrennungsmotor und Hybridfahrzeuge verfügen zwar noch über einen Verbrennungsmotor, der jedoch nur partiell eingesetzt wird und teilweise wird das Hybridfahrzeug auch ausschließlich von einem Elektromotor angerieben wie das Elektrofahrzeug. Damit stehen bei einem Elektrofahrzeug und bei einem Hybridfahrzeug zum Erwärmen der Luft keine Abwärme des Verbrennungsmotors zur Verfügung. Zum Erwärmen der Luft kann deshalb nur eine elektrische Heizeinrichtung eingesetzt werden. Bei den elektrischen Heizeinrichtungen handelt sich im Allgemeinen um sogenannte PTC-Heizelemente (PTC: Positiv Temperatur Koeffizient). Elektro- und Hybridfahrzeuge werden zur Übertragung der hohen elektrischen Leistungen dabei mit einem Hochspannungskreis von wenigstens 40 V betrieben, z. B. handelt es sich um einen Hochspannungskreis im Elektro- oder Hybridfahrzeug mit einer Spannung von 300 V. Da mittels der elektrischen Heizeinrichtung beim Elektrofahrzeug und beim Hybridfahrzeug mit dem abgeschalteten Verbrennungsmotor das Erwärmen der Luft ausschließlich durch die elektrische Heizeinrichtung zu bewerkstelligen ist, ist auch für die elektrische Heizeinrichtung eine hohe elektrische Leistung erforderlich und somit wird beim Elektro- oder Hybridfahrzeug die elektrische Heizeinrichtung mit Hochspannung betrieben. Hierzu ist es erforderlich, dass die elektrische Heizeinrichtung mit einer Hochspannungsquelle bei der Herstellung bzw. Montage des Kraftfahrzeuges verbunden wird.

Die DE 103 44 704 A1 zeigt ein Einbaumodul für einen Durchlass in einer Stirnwandung einer Fahrgastzelle eines Kraftfahrzeuges, wobei insbesondere die Stirnwandung sowohl für links als auch für rechts gelenkte Fahrzeuge verwendbar ist, wobei das Einbaumodul aus einem verstärkten Kunststoff besteht.

Bei Kraftfahrzeugen, die ausschließlich mit einem Verbrennungsmotor angetrieben werden, kann die Kraftfahrzeugklimaanlage auch mit einer elektrischen Heizeinrichtung zusätzlich zu einem Wärmeübertrager ausgebildet sein. Diese elektrische Heizeinrichtung verfügt dabei nur über eine geringe elektrische Heizleistung, so dass diese elektrische Heizeinrichtung auch mit Niederspannung, z. B. mit 12 V, betrieben werden kann. Zur Stromversorgung dieser elektrischen Heizeinrichtung wird die elektrische Heizeinrichtung mittels eines Kabels mit einem Kabelbaum mit einer Spannungsquelle im Motorraum verbunden. Der Kabelbaum umfasst viele Kabel zur Versorgung verschiedener elektrischer Einheiten und wird vom Motorraum durch die Stirnwandung zu entsprechenden Verbrauchseinheiten, z. B. im Fahrzeuginnenraum oder in der Kraftfahrzeugklimaanlage, geführt.

Die Aufgabe der vorliegenden Erfindung besteht deshalb darin, eine Kraftfahrzeugklimaanlage zur Verfügung zu stellen, bei der die elektrische Heizeinrichtung einfach, sicher und mit einem geringen Montageaufwand mit einer Hochspannungsquelle verbunden werden kann. Die Kraftfahrzeugklimaanlage soll in der Herstellung preiswert sein und zuverlässig im Betrieb arbeiten.

Diese Aufgabe wird gelöst mit einem Kraftfahrzeug gemäβ Anspruch 1

Durch die Anordnung des Steckers im Bereich der Stirnwandung ist die Montage der Kraftfahrzeugklimaanlage bzw. des Kraftfahrzeuges besonders einfach. Außerdem ist der Stecker dahingehend bzw. die Stirnwandung dahingehend auszubilden, dass in den Stecker ein Gegenstecker vom Motorraum aus eingesteckt werden kann. Damit ist die Montage der Kraftfahrzeugklimaanlage besonders einfach. Am Stecker ist ein Stromkabel befestigt, das durch die Stirnwandung durchgeführt wird.

Erfindungsgemäβ weist die Stirnwandung eine Ausnehmung auf und der Stecker für Hochspannung ist in der Ausnehmung angeordnet. Bei einer Anordnung des Steckers in der Ausnehmung der Stirnwandung durchstößt der Stecker somit die Stirnwandung und in den Stecker kann damit einfach vom Motorraum aus ein Gegenstecker eingebracht werden. Ferner ist bei einer derartigen Anordnung in der Ausnehmung auch möglich, der Stecker an dem Gehäuse der Kraftfahrzeugklimaanlage befestigt. Damit braucht der Stecker nicht an der Stirnwandung befestigt werden. Optional kann jedoch der Stecker auch bei einer Befestigung an dem Gehäuse der Kraftfahrzeugklimaanlage auch zusätzlich an der Stirnwandung befestigt werden.

Erfindungsgemäβ ist der Stecker für Hochspannung an einem Gehäuse der Kraftfahrzeugklimaanlage befestigt.

Vorzugsweise ist das Gehäuse ein Gehäuse zur Aufnahme einer Steuerungs- und/oder Regeleinheit für die elektrische Heizeinrichtung. Innerhalb des Gehäuses der Kraftfahrzeugklimaanlage kann die Steuerungs- und/oder Regeleinheit für die elektrische Heizeinrichtung angeordnet werden, so dass das Gehäuse für die Steuerungs- und/oder Regeleinheit auch das Gehäuse der Kraftfahrzeugklimaanlage ist. Abweichend hiervon kann die Steuerungs- und/oder Regeleinheit auch in einem gesonderten Gehäuse außerhalb des Gehäuses der Kraftfahrzeugklimaanlage angeordnet werden.

In einer Variante ist Abwärme der Steuerungs- und/oder Regeleinheit durch das Gehäuse und unmittelbar durch die Ausnehmung in der Stirnwandung in einen Motorraum des Kraftfahrzeuges einleitbar. Das Gehäuse der Steuerungs- und Regeleinheit ist dabei an der Ausnehmung der Stirnwandung angeordnet, so dass die Abwärme am Gehäuse der Steuerungs- oder Regeleinheit durch die Ausnehmung unmittelbar in den Motorraum eindringen kann. Vorzugsweise ist hierzu an dem Gehäuse der Steuerungs- und/oder Regeleinheit wenigstens eine Kühllamelle angeordnet, damit die Oberfläche zur Abgabe von Wärme vom Gehäuse in den Motorraum vergrößert wird.

Zweckmäßig ist der Stecker für Hochspannung mit einem Stromkabel verbunden zur Leitung des elektrischen Stromes zu der elektrischen Heizeinrichtung. Der Strom wird somit mittels des Stromkabels vom Stecker zu der elektrischen Heizeinrichtung geleitet. Das Stromkabel ist dabei vorzugsweise teilweise außerhalb des Gehäuses der Kraftfahrzeugklimaanlage angeordnet, so dass zwischen dem Stecker und dem Gehäuse der Kraftfahrzeugklimaanlage ein Abstand, z. B. ein Abstand von wenigstens 1 cm, 3 cm, 5 cm oder 10 cm besteht.

In einer weiteren Ausführungsform ist der Stecker für Hochspannung mit der elektrischen Heizeinrichtung mechanisch verbunden. In der elektrischen Verbindung zwischen dem Stecker und der elektrischen Heizeinrichtung besteht somit auch eine mechanische Verbindung.

Insbesondere umfasst die Kraftfahrzeugklimaanlage einen Gegenstecker für Hochspannung zum Einstecken in den Stecker für Hochspannung und insbesondere ist der Gegenstecker für Hochspannung mit dem Stromkabel mit der Hochspannungsquelle verbunden. Der Gegenstecker ist dabei mit dem Stromkabel mit der Hochspannungsquelle innerhalb des Motorraumes verbunden. Damit wird eine elektrische Verbindung zwischen der Hochspannungsquelle und der elektrischen Heizeinrichtung hergestellt. Vorzugsweise kann dabei der Gegenstecker vom Motorraum aus in den Stecker eingesteckt werden bei der Montage der Kraftfahrzeugklimaanlage. Dies ermöglicht eine besonders einfache und sichere Montage des Gegensteckers am Stecker und damit der elektrischen Verbindung zwischen der Hochspannungsquelle und der elektrischen Heizeinrichtung.

In einer weiteren Ausgestaltung ist der Gegenstecker für Hochspannung im Bereich einer Stirnwandung des Kraftfahrzeuges angeordnet.

In einer ergänzenden Variante weist der Gegenstecker für Hochspannung einen Abstand von weniger als 20 cm, 10 cm, 5 cm oder 2 cm zu der Stirnwandung auf und/oder der Gegenstecker für Hochspannung ist an der Stirnwandung angeordnet und/oder der Gegenstecker für Hochspannung ist an der Stirnwandung mittelbar oder unmittelbar fixiert.

In einer weiteren Variante ist der Gegenstecker ist für Hochspannung in oder an der Ausnehmung der Stirnwandung angeordnet.

In einer weiteren Ausgestaltung ist die elektrische Heizeinrichtung wenigstens ein PTC-Heizelement.

Insbesondere beträgt die Spannung der Hochspannung zur Energieversorgung der elektrischen Heizeinrichtung mit elektrischem Strom wenigstens 40 V, 60 V, 110 V, 220 V, 400 V, 600 V oder 1000 V.

In einer weiteren Ausgestaltung weist die Kraftfahrzeugklimaanlage nur einen Stecker und/oder nur eine Gegenstecker für Hochspannung zur Versorgung der elektrischen Heizeinrichtung mit elektrischem Strom auf. Insbesondere verfügt die Kraftfahrzeugklimaanlage nur über einen Stecker und nur einen Gegenstecker für Hochspannung, so dass zur elektrischen Verbindung der elektrischen Heizeinrichtung mit der Hochspannungsquelle bei der Montage nur ein Stecker in den nur einen Gegenstecker eingesteckt werden muss.

In einer weiteren Ausgestaltung ist die Steuerungs- und/oder Regeleinheit für die elektrische Heizeinrichtung außerhalb des Motorraumes angeordnet.

In einer weitem Variante ist die Steuerungs- und/oder Regeleinheit im Bereich einer zu dem Motorraum abgewandten Seite der Stirnwandung angeordnet.

In einer zusätzlichen Ausgestaltung sind der Stecker und/oder der Gegenstecker wenigstens teilweise im Motorraum angeordnet.

Erfindungsgemäβ sind der Stecker und/oder der Gegenstecker wenigstens teilweise in der Ausnehmung der Stirnwandung angeordnet.

In einer ergänzenden Ausgestaltung sind der Stecker und/oder der Gegenstecker wenigstens teilweise nicht im Motorraum angeordnet.

In einer zusätzlichen Ausführungsform ist der Stecker und/oder der Gegenstecker im Bereich der Steuerungs- und/oder Regeleinheit der elektrischen Heizeinrichtung angeordnet.

In einer weiteren Ausgestaltung ist der Gegenstecker im Bereich der elektrischen Heizeinrichtung angeordnet.

Zweckmäßig umfasst die Kraftfahrzeugklimaanlage einen Kondensator, einen Verdichter, einen Verdampfer und Leitungen für einen Kältemittelkreislauf.

In einer zusätzlichen Ausgestaltung umfasst die Kraftfahrzeugklimaanlage ein Gebläse und/oder eine Steuerungseinheit und/oder einen Wärmeübertrager zum Erwärmen der Luft mittels Kühlmittel aus einem Kühlmittelkreislauf eines Verbrennungsmotors und/oder wenigstens eine Luftklappe.

Ein erfindungsgemäßes Kraftfahrzeug umfasst eine in dieser Schutzrechtsanmeldung beschriebene Kraftfahrzeugklimaanlage.

Im Nachfolgenden wird ein Ausführungsbeispiel der Erfindung unter Bezugnahme auf die beigefügte Zeichnung näher beschrieben. Es zeigt:

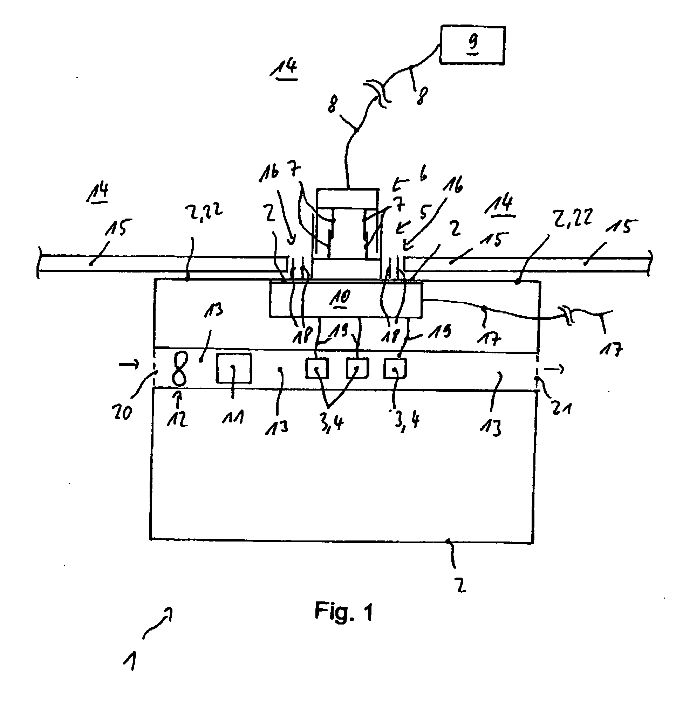

Fig. 1 einen stark schematisierten Schnitt einer Kraftfahrzeugklimaanlage.

Die in Fig. 1 stark schematisiert dargestellte Kraftfahrzeugklimaanlage 1 umfasst ein Gehäuse 2, in dem ein Luftkanal 13 ausgebildet ist. In dem Luftkanal 13 ist ein Gebläse 12 zum Umwälzen der Luft in dem Luftkanal 13 vorhanden. In Strömungsrichtung nach dem Gebläse 12 ist ein Verdampfer 11 zum Kühlen der Luft und eine elektrische Heizeinrichtung 3 bestehend aus PTC-Helzelementen 4 angeordnet. Die elektrische Heizeinrichtung 3 bzw. die PTC-Heizelemente 4 als elektrische Widerstandselemente erwärmen sich beim Durchleiten von elektrischem Strom. Die PTC-Heizelemente 4 bestehen dabei aus Materialien, die einen elektrischen Widerstand aufweisen und bei tiefen Temperaturen den Strom besser leiten können als bei höheren Temperaturen. Der elektrische Widerstand vergrößert sich somit bei steigender Temperatur, so dass eine Überhitzung der PTC-Heizelemente 4 verhindert werden kann als bei der Verwendung eines normalen Heizelementes (nicht dargestellt), da hier unabhängig von den Randbedingungen, z. B. der Menge der Luft, die an den normalen Heizelementen vorbeigeleitet wird, immer ungefähr der gleiche elektrische Widerstand und dadurch im Wesentlichen die gleiche elektrische Heizleistung aufgebracht wird. Die PTC-Heizelemente 4 werden dabei mit Hochspannung mit einer Spannung im Bereich von ungefähr 300 V betrieben.

Die Kraftfahrzeugklimaanlage 1 dient somit zum Erwärmen und/oder Kühlen von in einen Fahrzeuginnenraum des Kraftfahrzeuges (nicht dargestellt) eingeleiteter Luft. Das Gehäuse 2 der Kraftfahrzeugklimaanlage 1 weist hierzu eine Eintrittsöffnung 20 zum Einleiten von Luft in die Kraftfahrzeugklimaanlage 1 und eine Austrittsöffnung 21 zum Ausleiten der erwärmten und/oder gekühlten Luft aus der Kraftfahrzeugklimaanlage 1 und zum anschließenden Einleiten in den Innenraum des Kraftfahrzeuges auf.

Optional kann die Kraftfahrzeugklimaanlage 1 auch eine Wärmeübertrager (nicht dargestellt) bzw. einen Wärmetauscher aufweisen, mittels dem zusätzlich zu der elektrischen Heizeinrichtung 3 die durch den Luftkanal 13 geleitete Luft auch durch Abwärme vom Verbrennungsmotor eines Kraftfahrzeuges erwärmt werden kann.

Innerhalb des Gehäuses 2 der Kraftfahrzeugklimaanlage 1 ist eine Steuerungs- und/oder Regeleinheit 10 für die elektrische Heizeinrichtung 3 angeordnet. Die Steuerungs- und/oder Regeleinheit 10 dient zur Steuerung und/oder Regelung der elektrischen Heizleistung der elektrischen Heizeinrichtung 3. Die Steuerungs- und/oder Regeleinheit 10 kann dabei auch als ein Relais ausgebildet sein. Mittels eines Steuerungskabels 17 wird die Steuerungs- und/oder Regeleinheit 10 von einer übergeordneten Steuerungseinheit der Kraftfahrzeugklimaanlage 1 und/oder des Kraftfahrzeuges gesteuert und/oder geregelt. Innerhalb eines Motorraums 14 des Kraftfahrzeuges ist eine Hochspannungsquelle 9 vorhanden.

Eine Stirnwandung 15 trennt den Motorraum 14 von einem Raum ab, der gegenüber der Stirnwandung 15 von dem Moorraum 14 abgewandt ist und dabei auch den Innenraum des Kraftfahrzeuges umfasst. In diesem Raum ist die Kraftfahrzeugklimaanlage 1 angeordnet. Die Stirnwandung 15 des Kraftfahrzeuges weist dabei eine Ausnehmung 16 auf. An einer Außenseite des Gehäuses 2 der Kraftfahrzeugklimaanlage 1 ist ein Stecker 5 für Hochspannung mit zwei elektrischen Kontaktelementen 7 befestigt. Eine Gehäusewandung 22 des Gehäuses 2, an welcher der Stecker 5 befestigt ist, ist dabei im Bereich der Stirnwandung 15 angeordnet. Dadurch besteht ein geringer Abstand zwischen der Gehäusewandung 22 und der Stirnwandung 15. Der Stecker 5 durchstößt dabei durch die Ausnehmung 16 die Stirnwandung 15 und ist damit teilweise innerhalb der Ausnehmung 16 angeordnet. Ferner ist ein Teil des Steckers 5 auch innerhalb des Motorraumes 14 positioniert. Ein Gegenstecker 6 mit zwei elektrischen Kontaktelementen 7 ist mittels eines Stromkabels 8 mit einer Hochspannungsquelle 9 im Motorraum 14 elektrisch verbunden. Der Gegenstecker 6, welcher in den Stecker 5 eingesteckt ist, stellt somit eine elektrische Verbindung zwischen dem Stecker 5 mittels den elektrischen Kontaktelementen 7 und des Stromkabels 8 zu der Hochspannungsquelle 9 her. Mittels nicht dargestellter elektrischer Leitungen wird der Strom anschließend von den elektrischen Kontaktelementen 7 des Steckers 5 zu der Steuerung- und/oder Regeleinheit 10 geleitet. Von der Steuerungs- und/oder Regeleinheit 10 führen Stromdrähte 19 zu den PTC-Heizelementen 4. Somit besteht eine elektrisch leitende Verbindung von den PTC-Heizelementen 4 zu der Hochspannungsquelle 9, die von der Steuerungs- und/oder Regeleinheit 10 unterbrochen werden kann.

Die Steuerungs- und/oder Regeleinheit 10 gibt Abwärme ab. Zum Ableiten dieser Abwärme ist an der Gehäusewandung 22, die sowohl eine Gehäusewandung 22 der Kraftfahrzeugklimaanlage 1 als auch der Steuerungs-und/oder Regeleinheit 10 darstellt, Kühllamellen 18 ausgebildet. Die Größe der Ausnehmung 16 ist dabei geringfügig größer ausgebildet als zur Durchführung des Steckers 5 erforderlich, so dass Abwärme der Steuerungs-und/oder Regeleinheit 10 unmittelbar durch die Ausnehmung 16 von der Gehäusewandung 22 und den Kühllamellen 18 in den Motorraum 14 durch Wärmestrahlung und Wärmekonvektion eingeleitet werden kann. Eine gute und zuverlässige Kühlung der Steuerungs- und/oder Regeleinheit 10 ist damit gewährleistet.

Bei der Montage der Kraftfahrzeugklimaanlage 1 in einem Kraftfahrzeug wird zunächst die Kraftfahrzeugklimaanlage 1 mit dem an der Gehäusewandung 22 bereits befestigten Stecker 5 mittels nicht dargestellter Fixierungseinrichtungen in dem Raum befestigt, welche an der abgewandten Seite der Stirnwandung 15 zu dem Motorraum 14 beginnt. Dies erfolgt dabei dahingehend, dass bei der Fixierung der Kraftfahrzeugklimaanlage 1 in diesem Raum der Stecker 5 durch die bereits vorhandene Ausnehmung 16 in der Stirnwandung 15 eingeführt wird. Bei der Montage der Kraftfahrzeugklimaanlage 1 in diesem Raum brauchen somit keine zusätzlichen Vorkehrungen zur Verbindung der elektrischen Heizeinrichtung 3 mit der Hochspannungsquelle 9 getroffen werden. Lediglich der bereits vorhandene Stecker 5 auf der Gehäusewandung 22 ist in die bereits vorhandene Ausnehmung 16 der Stirnwandung 15 einzuführen. Nach der Fixierung der Kraftfahrzeugklimaanlage 1 kann in einfacher Weise der Gegenstecker 6 vom Motorraum 14 aus der Gegenstecker 6 in den Stecker 5 eingeführt werden. Damit können im Wesentlichen Montagefehler bei der Herstellung der Hochspannungsverbindung zwischen der Hochspannungsquelle 9 und der elektrischen Heizeinrichtung 3 vermieden werden.

In einem weiteren nicht dargestellten nicht erfindungsgemäßen Beispiel ist der Stecker 5 nicht am Gehäuse 2 bzw. der Gehäusewandung 22 oder in der Nähe der Steuerungs- und/oder Regeleinheit 10 befestigt, sondern lediglich mittels des Stromkabels 8 wird der elektrische Strom vom dem Stecker 5 zu der elektrischen Heizeinrichtung 3 geleitet. Der Stecker 5 kann dabei beispielsweise an der Stirnwandung 15 angeordnet sein, z. B. innerhalb des Motorraumes 14, und das Kabel an dem Stecker 5 wird durch die Stirnwandung 15 zu der elektrischen Heizeinrichtung 3 geführt. Damit kann auch in diesem nicht dargestellten Ausführungsbeispiel der Gegenstecker 6 einfach vom Motorraum 14 aus in den Stecker 5 zur Herstellung der elektrischen Verbindung zwischen der Hochspannungsquelle 9 und der elektrischen Heizeinrichtung 3 eingesteckt werden.

In einem weiteren nicht dargestellten Beispiel ist der Stecker 5 im Bereich der elektrischen Heizeinrichtung 3 z. B. mit einem Abstand von weniger 10 cm oder 5 cm, ausgebildet. Damit ist nur ein Stromkabel 8 mit einer geringen Länge oder es sind nur Stromdrähte 19 erforderüch zur Leitung des elektrischen Stromes vom Stecker 5 zu der elektrischen Heizeinrichtung 3. Vorzugsweise ist dabei in diesem Ausführungsbeispiel die Kraftfahrzeugklimaanlage 1 ohne der Steuerungs- und/oder Regeleinheit 10 ausgebildet. Für die Anordnung des Steckers 5 bezüglich der Stirnwandung 15 gibt es verschiedene Möglichkeiten in diesem Ausführungsbeispiel. Beispielsweise kann in analoger Weise zu dem ersten Ausführungsbeispiel der Stecker 5 teilweise innerhalb der Ausnehmung 16 in der Stirnwandung 15 positioniert sein.

Die elektrische Versorgung des Gebläses 12 sowie von Stellmotoren zum Bewegen nicht dargestellter Luftklappen der Kraftfahrzeugklimaanlage 1 erfolgt dabei mittels Niederspannung, z. B. einer Spannung im Bereich von 12 V. Hierzu wird ein nicht dargestellter Kabelbaum vom Motorraum 14 zu dem zum Motorraum 14 abgewandten Raum bezüglich der Stirnwandung 15 durch die Stirnwandung 15 geführt und damit das Gebläse 12 und die Stellmotoren für die nicht dargestellten Luftklappen mit elektrischer Energie versorgt. Mittels des Kabelbaumes (nicht dargestellt) werden außerdem noch weitere Stromverbraucher innerhalb des Fahrzeuginnenraumes, z. B. Beleuchtungseinrichtungen oder ein Radio, mit elektrischer Energie versorgt. Der Stecker und der Gegenstecker 5, 6 dienen damit ausschließlich zur Versorgung der elektrischen Heizeinrichtung 3 mit Hochspannung.

Insgesamt betrachtet sind mit der erfindungsgemäßen Kraftfahrzeugklimaanlage 1 wesentliche Vorteile verbunden. Die elektrische Heizeinrichtung 3 der Kraftfahrzeugklimaanlage 1 wird mit Hochspannung betrieben. Zur Stromversorgung der elektrischen Heizeinrichtung 3 durch eine in dem Motorraum 14 angeordnete Hochspannungsquelle 9 wird der Stecker 5 und den Gegenstecker 6 im Bereich der Stirnwandung 15 angeordnet. Damit kann bei der Montage der Kraftfahrzeugklimaanlage eine besonders einfache und zuverlässige elektrische Verbindung zwischen der Hochspannungsquelle 9 und der elektrischen Heizeinrichtung 3 hergestellt werden.

### Bezugszeichenliste

- 1: Kraftfahrzeugklimaanlage
- 2: Gehäuse
- 3: Elektrische Heizeinrichtung
- 4: PTC-Heizelement
- 5: Stecker
- 6: Gegenstecker
- 7: Elektrische Kontaktelement
- 8: Stromkabel
- 9: Hochspannungsquelle
- 10: Steuerungs- und/oder Regeleinheit für elektrische Heizeinrichtung
- 11: Verdampfer
- 12: Gebläse
- 13: Luftkanal
- 14: Motorraum
- 15: Stirnwand
- 16: Ausnehmung
- 17: Steuerungskabel für Steuerungseinheit
- 18: Kühllamelle
- 19: Stromdraht
- 20: Eintrittsöffnung
- 21: Austrittsöffnung
- 22: Gehäusewandung

## Patentansprüche

1. Kraftfahrzeug mit einer Stirnwand und einer Klimaanlage (1), insbesondere für ein Elektro- oder Hybridfahrzeug, umfassend
- ein Gehäuse (2),
- vorzugsweise wenigstens einen Luftkanal (13),
- vorzugsweise ein Gebläse (12) zum Umwälzen von Luft und
- wenigstens eine mit Hochspannung betriebene elektrische Heizeinrichtung (3), wobei
ein Stecker (5) für Hochspannung mit wenigstens einem elektrischen Kontaktelement (7) im Bereich einer Stirnwandung (15) des Kraftfahrzeuges angeordnet ist und der Stecker (5) zum elektrischen Verbinden der elektrischen Heizeinrichtung (3) mit einer Hochspannungsstromquelle (9) dient
**dadurch gekennzeichnet, dass** die Stirnwandung (15) eine Ausnehmung (16) aufweist und der Stecker (5) für Hochspannung in der Ausnehmung (16) angeordnet ist, wobei der Stecker (5) für Hochspannung an einem Gehäuse (2) der Kraftfahrzeugklimaanlage (1) befestigt ist.

2. Kraftfahrzeug nach Anspruch 1, **dadurch gekennzeichnet, dass** das Gehäuse (2) ein Gehäuse (2) zur Aufnahme einer Steuerungs- und/oder Regeleinheit (10) für die elektrische Heizeinrichtung (3) ist.

3. Kraftfahrzeug nach Anspruch 2, **dadurch gekennzeichnet, dass** Abwärme der Steuerungs- und/oder Regeleinheit (10) durch das Gehäuse (2) und unmittelbar durch die Ausnehmung (16) in der Stirnwandung (15) in einen Motorraum (14) des Kraftfahrzeuges einleitbar ist.

4. Kraftfahrzeug nach einem oder mehreren der vorhergehenden Ansprüche, **dadurch gekennzeichnet, dass** der Stecker (5) für Hochspannung mit einem Stromkabel (8) verbunden ist zur Leitung des elektrischen Stromes zu der elektrischen Heizeinrichtung (3).

5. Kraftfahrzeug nach einem oder mehreren der vorhergehenden Ansprüche, **dadurch gekennzeichnet, dass** die Stecker (5) für Hochspannung mit der elektrischen Heizeinrichtung (3) mechanisch verbunden ist.

6. Kraftfahrzeug nach einem oder mehreren der vorhergehenden Ansprüchen, **dadurch gekennzeichnet, dass** die Kraftfahrzeugklimaanlage (1) einen Gegenstecker (6) für Hochspannung umfasst zum Einstecken in den Stecker (5) für Hochspannung und insbesondere der Gegenstecker (6) für Hochspannung mit dem Stromkabel (8) mit der Hochspannungsquelle (9) verbunden ist.

7. Kraftfahrzeug nach Anspruch 6, **dadurch gekennzeichnet, dass** der Gegenstecker (6) für Hochspannung im Bereich einer Stirnwandung (15) des Kraftfahrzeuges angeordnet ist.

8. Kraftfahrzeug nach Anspruch 7, **dadurch gekennzeichnet, dass** der Gegenstecker (6) für Hochspannung einen Abstand von weniger als 20 cm, 10 cm, 5 cm oder 2 cm zu der Stirnwandung (15) aufweist und/oder der Gegenstecker (6) für Hochspannung an der Stirnwandung (15) angeordnet ist und/oder der Gegenstecker (6) für Hochspannung an der Stirnwandung (15) mittelbar oder unmittelbar fixiert ist.

9. Kraftfahrzeug nach Anspruch 7 oder 8, **dadurch gekennzeichnet, dass** der Gegenstecker (6) für Hochspannung in oder an der Ausnehmung (16) der Stirnwandung (15) angeordnet ist.

10. Kraftfahrzeug nach einem oder mehreren der vorhergehenden Ansprüche, **dadurch gekennzeichnet, dass** die elektrische Heizeinrichtung (3) wenigstens ein PTC-Heizelement (4) ist.

11. Kraftfahrzeug nach einem oder mehreren der vorhergehenden Ansprüche, **dadurch gekennzeichnet, dass** die Spannung der Hochspannung zur Energieversorgung der elektrischen Heizeinrichtung (3) mit elektrischen Strom wenigstens 40 V, 60 V, 110 V, 220 V, 400 V, 600 V oder 1000 V beträgt.

12. Kraftfahrzeug nach einem oder mehreren der vorhergehenden Ansprüche, **dadurch gekennzeichnet, dass** die Kraftfahrzeugklimaanlage (1) nur einen Stecker (5) und/oder nur eine Gegenstecker (6) für Hochspannung zur Versorgung der elektrischen Heizeinrichtung (3) mit elektrischem Strom aufweist.

## Claims

1. A motor vehicle comprising an end wall and an air conditioning system (1), in particular for an electric or hybrid vehicle, comprising:
- a housing (2);
- preferably at least one air duct (13);
- preferably a fan (12) for circulating air; and
- at least one electrical heating device (3) operated with high voltage,
wherein a plug (5) for high voltage, having at least one electrical contact element (7), is arranged in the region of an end wall (15) of the motor vehicle, and the plug (5) is used to electrically connect the electrical heating devise (3) to a high voltage power source (9), **characterized in that** the end wail (15) has a cut-out (16), and the plug (5) for high voltage is arranged in the cut-out (16), wherein the plug (5) for high voltage is attached to a housing (2) of the motor vehicle air conditioning system (1).

2. The motor vehicle according to claim 1, **characterized in that** the housing (2) is a housing (2) for receiving a control unit (10) for the electrical heating device (3).

3. The motor vehicle according to claim 2, **characterized in that** waste heat of the control unit (10) can be conducted through the housing (2) and directly through the cut-out (16) in the end wall (15) and introduced into an engine compartment (14) of the motor vehicle.

4. A motor vehicle according to one or more of the preceding claims, **characterized in that** the plug (5) for high voltage is connected to a power cable (8) for conducting the electrical current to the electrical heating device (3).

5. A motor vehicle according to one or more of the preceding claims, **characterized in that** the plug (5) for high voltage is mechanically connected to the electrical heating device (3).

6. A motor vehicle according to one or more of the preceding claims, **characterized in that** the motor vehicle air conditioning system (1) comprises a mating plug (6) for high voltage for plugging into the plug (5) for high voltage, and in particular that the mating plug (6) for high voltage is connected to the high voltage source (9) by way of the power cable (8).

7. The motor vehicle according to claim 6, **characterized in that** the mating plug (6) for high voltage is arranged in the region of an end well (15) of the motor vehicle.

8. The motor vehicle according to claim 7, **characterized in that** the mating plug (6) for high voltage has a distance of less than 20 cm, 10 cm, 5 cm, or 2 cm, from the end wail (15) and/or the mating plug (6) for high voltage is arranged on the end wall (15) and/or the mating plug (6) for high voltage is directly or indirectly fixed to the end wall (15).

9. The motor vehicle according to claim 7 or 8, **characterized in that** the mating plug (6) for high voltage is arranged in or on the cut-out (16) of the end wall (15).

10. A motor vehicle according to one or more of the preceding claims, **characterized in that** the electrical heating device (3) is at least one PTC heating element (4).

11. A motor vehicle according to one or more of the preceding claims, **characterized in that** the voltage of the high voltage for the energy supply of the electrical heating device (3) with electrical current is at least 40 V, 60 V, 110 V, 220 V, 400 V, 600 V, or 1000 V.

12. A motor vehicle according to one or more of the preceding claims, **characterized in that** the motor vehicle air conditioning system (1) comprises only one plug (5) and/or one mating plug (6) for high voltage for supplying the electrical heating device (3) with electrical current.

## Revendications

1. Véhicule automobile comportant un tablier de séparation et un système de climatisation (1), en particulier pour un véhicule électrique ou hybride, comprenant :
- un boîtier (2),
- de préférence au moins un conduit d'air (13),
- de préférence, un pulseur (12) pour la circulation d'air, et
- au moins un dispositif de chauffage électrique (3) fonctionnant sous haute tension,
où un connecteur (5) de haute tension comportant au moins un élément de contact électrique (7) est disposé dans la zone d'un tablier de séparation (15) du véhicule automobile, et le connecteur (5) sert à la connexion électrique du dispositif de chauffage électrique (3), à une source de courant à haute tension (9),
**caractérisé en ce que** le tablier de séparation (15) présente une cavité (16), et le connecteur (5) de haute tension est disposé dans la cavité (16), où le connecteur (5) de haute tension est fixé sur un boîtier (2) du système de climatisation (1) du véhicule automobile.

2. Véhicule automobile selon la revendication 1, **caractérisé en ce que** le boîtier (2) est un boîtier (2) servant au logement d'une unité de commande et/ou de régulation (10) pour le dispositif de chauffage électrique (3).

3. Véhicule automobile selon la revendication 2, **caractérisé en ce que** la chaleur perdue de l'unité de commande et/ou de régulation (10), se dissipant à travers le boîtier (2) et directement à travers la cavité (16) formée dans le tablier de séparation (15), peut être introduite dans un compartiment moteur (14) du véhicule automobile.

4. Véhicule automobile selon l'une quelconque ou plusieurs des revendication précédentes, **caractérisé en ce que** le connecteur (5) de haute tension est connecté à un câble d'alimentation en courant (8), pour acheminer le courant électrique jusqu'au dispositif de chauffage électrique (3).

5. Véhicule automobile selon l'une quelconque ou plusieurs des revendications précédentes, **caractérisé en ce que** le connecteur (5) de haute tension est couplé mécaniquement au dispositif de chauffage électrique (3).

6. Véhicule automobile selon l'une quelconque ou plusieurs des revendications précédentes, **caractérisé en ce que** le système de climatisation (1) du véhicule automobile comprend un connecteur homologue (6) de haute tension, prévu pour être introduit dans le connecteur (5) de haute tension et, en particulier, le connecteur homologue (6) de haute tension est connecté à la source de haute tension (9), par le câble d'alimentation en courant (8).

7. Véhicule automobile selon la revendication 6, **caractérisé en ce que** le connecteur homologue (6) de haute tension est disposé dans la zone d'un tablier de séparation (15) du véhicule automobile.

8. Véhicule automobile selon la revendication 7, **caractérisé en ce que** le connecteur homologue (6) de haute tension présente un intervalle inférieur à 20 cm, à 10 cm, à 5 cm ou à 2 cm par rapport au tablier de séparation (15) et/ou le connecteur homologue (6) de haute tension est disposé sur le tablier de séparation (15) et/ou le connecteur homologue (6) de haute tension est fixé sur le tablier de séparation (15), indirectement ou directement.

9. Véhicule automobile selon la revendication 7 ou 8, **caractérisé en ce que** le connecteur homologue (6) de haute tension est disposé dans ou au niveau de la cavité (16) du tablier de séparation (15).

10. Véhicule automobile selon l'une quelconque ou plusieurs des revendications précédentes, **caractérisé en ce que** le dispositif de chauffage électrique (3) est au moins un élément chauffant (4) à coefficient de température positif (CTP).

11. Véhicule automobile selon l'une quelconque ou plusieurs des revendications précédentes, **caractérisé en ce que** la tension de la haute tension pour l'alimentation en énergie du dispositif de chauffage électrique (3), avec du courant électrique, est au moins de 40 V, de 60 V, de 110 V, de 220 V, de 400 V, de 600 V ou de 1000 V.

12. Véhicule automobile selon l'une quelconque ou plusieurs des revendications précédentes, **caractérisé en ce que** le système de climatisation (1) d'un véhicule automobile présente seulement un connecteur (5) et/ou seulement un connecteur homologue (6) de haute tension servant à l'alimentation du dispositif de chauffage électrique (3) en courant électrique.
